Europäisches Patentamt

European Patent Office

Office européen des brevets

(19)

(11) Publication number: **0 186 015 B1**

(12) **EUROPEAN PATENT SPECIFICATION**

(45) Date of publication of patent specification: **17.04.91**

(51) Int. Cl.⁵: **B29C 43/18**, B29C 43/40, B29C 67/18, B29C 51/08, //B29L9:00

(21) Application number: **85115565.5**

(22) Date of filing: **06.12.85**

(54) **A method of making a laminated body and a molding apparatus for the same.**

(30) Priority: **07.12.84 JP 259728/84**
**10.12.84 JP 261088/84**

(43) Date of publication of application:
**02.07.86 Bulletin 86/27**

(45) Publication of the grant of the patent:
**17.04.91 Bulletin 91/16**

(84) Designated Contracting States:
**DE FR GB IT**

(56) References cited:
**DE-A- 2 753 906**
**DE-A- 3 029 912**
**DE-C- 833 118**
**US-A- 2 797 179**

**PATENT ABSTRACTS OF JAPAN, vol. 8, no. 280 (M-347)[1717], 21st December 1984, page 150 M 347; & JP-A-59 150 740 (SUMITOMO KAGAKU KOGYO K.K.) 29-08-1984**

(73) Proprietor: **SUMITOMO CHEMICAL COMPANY, LIMITED**
**Kitahama 4-chome 5-33**
**Chuo-ku Osaka 541(JP)**

(72) Inventor: **Masui, Shohei Sumitomo Chemical Company, Ltd.**
**10-1, Tsukahara 2-Chome**
**Takatsuki City Osaka(JP)**
Inventor: **Oishi, Kanemitsu Sumitomo Chemical Company, Ltd.**
**10-1, Tsukahara 2-Chome**
**Takatsuki City Osaka(JP)**
Inventor: **Mistui, Kiyoshi Sumitomo Chemical Company, Ltd.**
**10-1, Tsukahara 2-Chome**
**Takatsuki City Osaka(JP)**
Inventor: **Hosokawa, Toshihiro c/o Hosokawa Seisakusho Co.Ltd**
**2840, Ikedashimomachi**
**Izumi City Osaka(JP)**
Inventor: **Ishitsubo, Ryuichi c/o Hosokawa Seisakusho Co. Ltd**
**2840, Ikedashimomachi**
**Izumi City Osaka(JP)**

EP 0 186 015 B1

PATENT ABSTRACTS OF JAPAN, vol. 8, no.
280 (M-347)[1717], 21st December 1984, page
150 M 347; & JP-A-59 150 741 (SUMITOMO
KAGAKU KOGYO K.K.) 29-08-1984

(74) Representative: Lehn, Werner, Dipl.-Ing. et al
Hoffmann, Eitle & Partner Patentanwälte Ar-
abellastrasse 4
W-8000 München 81(DE)

2

## Description

This invention relates to a method of making a laminated body which consists of an upper layer member and a synthetic resin layer and to a molding apparatus for use in the same.

As one method of making a laminated body, there is proposed, for example, in the Japanese Patent Application Disclosure No.150740 of 1984 a method whereby the molding of the laminated body is performed by the use of a molding apparatus which is provided with a movable female mold or a movable male mold and with an upper layer member-fixing frame having a sliding port wherethrough the male mold passes slidingly, and wherein, after holding an upper member between the upper layer member-fixing frame and the female mold, a molten resin is supplied between the upper layer member and the female mold or the male mold and then the mold-tightening of the female mold and the male mold is conducted.

When using this former method as mentioned above, it is however impossible to make such a laminated body possessing a good appearance, clear of wrinkles or tears over the upper layer member covering the synthetic resin. Further, it needs a cutting process and a cutting apparatus for cutting the upper layer member after the forming process. Furthermore, it is difficult to be in accordance with the each center point of the upper layer member and the synthetic resinous body by the former apparatus not combining the the molding apparatus and cutting apparatus.

Synthetic resinous moldings are being used nowadays in large quantities in every field including, for example, motorcars, home electric appliances, and others for reasons of the inexpensiveness, the easy shapability as desired, and the lightweight properties.

On the other hand, however, these known molded goods have certain defects in that they are cheap-looking, cold to the touch or easily scratched. It is strongly desired to impart to them a degree of decorativeness or a sense of being soft to the touch.

For such reasons, although a variety of investigations and researches have been done in the past with the object of manufacturing compound articles able to satisfy such demands as mentioned above, yet it has proved that it is difficult for products made of a single substance to possess the necessary free shapeability, the desired strength and the surface property being improved in relation to the above-mentioned defects.

Therefore, in the current state of technology, there are widely use in general such kinds of laminated bodies as are assembled with plural materials which have a variety of functions.

In this specification, the mold whose outer side face corresponds to the side face of the outermost circumference being opposite to each other at the mold-tightening time is called a male mold, while the mold whose inner side face corresponds to the same as above-mentioned side face of the outermost circumference being opposite to each other at the same mold-tightening time is called a female mold.

The method and the apparatus according to our invention both have been accomplished by aiming to solve the above-mentioned problem in the former method and thereby enables the laminated body being covered by the upper layer member to be obtained without wrinkles, tears, and with each centre point of the upper layer member and the synthetic resinous body being aligned.

According to one aspect of the invention, there is provided a method of making a laminated body consisting of a synthetic resin provided with an upper layer member thereon, comprising the steps of arranging said upper layer member between a female mold and an upper layer member-fixing frame attached shiftably either on the side of a female mold or on the side of a male mold, supplying molten resin between said male mold and female mold, closing said female mold and said upper layer member-fixing frame so that periphery of said upper layer member is held by contact of said female mold and said upper layer member-fixing frame, further closing said female mold and said male mold so as to start to shape at least said upper layer member and compressing said female mold and said male mold so as to shape said upper layer member and said molten resin by this compression, characterized by cutting, prior to or simultaneous with completion of said compressing step said upper layer member by engagement of the inner edges of said female mold with outer edges of said male mold while said molten resin is shaped between said molds without being cut by said edges, so as to form the laminated body.

According to another aspect of the invention, there is provided a molding apparatus for making a laminated body consisting of a synthetic resin member having an upper layer member thereon, which apparatus comprises a male mold, a female mold, an upper layer member-fixing frame, an expanding and contracting means, the upper layer member-fixing frame being mounted either on the side of the male mold or on the side of the female mold for shifting by means of the expanding and contracting means and the outer side face of the male mold being slidable over the whole circumference of an opening through which the convex parts of the male mold are insertable, characterised in that both the outer side edge of the male mold and the inner side edge of the female mold constitute a cutter for the upper layer member and the outer side of the male mold and the inner side of the female mold being dimensional to slide on each other over the whole circumference, so that said synthetic resin member can be molded between said molds without being cut by said cutter to form said laminated body.

For a better understanding of the invention and to show how the same may be carried into effect, reference will now be made, by way of example, to the accompanying drawings, in which:

Fig. 1 is a sectional view of an exemplary embodiment of apparatus according to the present invention;

Fig. 2 is a plan view seen in the direction of the arrows A-A of Fig. 1;

Figs. 3 to 5 are vertical sectional views of the apparatus of Fig. 1;

Fig. 6 is a sectional view of a laminated body;

Fig. 7 is a sectional view of another laminated body;

Fig. 8 is a sectional view of a further laminated body;

Fig. 9 is a sectional view of a first modified embodiment;

Fig. 10(a) is a sectional view of the first modified embodiment at the time of the finishing of the molding;

Fig. 10(b) is a partially enlarged view of Fig. 10-(a); and

Fig. 11 is a sectional view of the laminated body produced;

Figs. 12 to 15 are sectional views of a second modified embodiment at various stages of a molding process;

Figs. 16 to 18 are sectional views for illustrating a third modified embodiment at various stages of a molding process; and

Fig. 19 is a sectional view for illustrating a fourth modified embodiment.

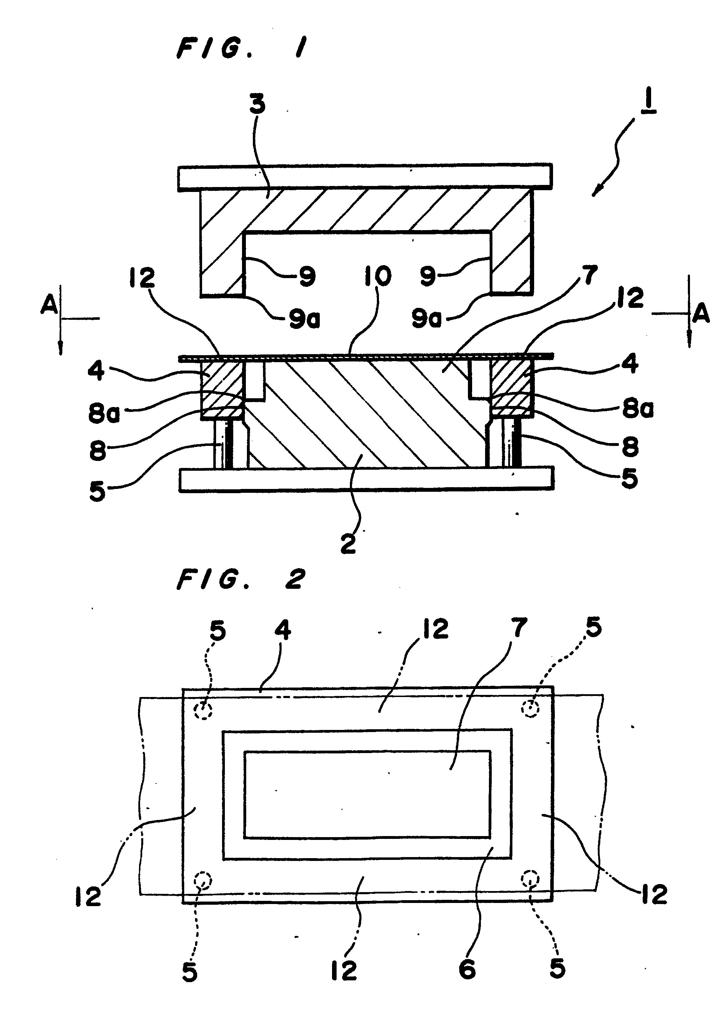

Now we describe in details for a first exemplary embodiment of the method and apparatus according to the present invention with reference to illustrating of Figs. 1 to 8.

Fig. 1 and Figs. 3 to 8 are sectional views for illustrating the exemplary embodiment; Fig. 2 is a view seen in the direction of the arrowheads of the lines A-A of Fig. 1;

In the figures, the reference numeral 1 indicates a molding apparatus, the numeral indicates 2 a male mold, the numeral indicates 3 a female mold, the numeral 4 indicates an upper layer member-fixing frame, the numeral 5 indicates an expanding and contracting means, the numeral 6 indicates a sliding opening of the upper layer member-fixing frame 5, the numeral 8 indicates the outer side face of male mold 2, the numeral 9 indicates the inner side face of female mold 3, the numeral 10 indicates an upper layer member, the numeral 11 indicates a molten resin and the numeral 14 indicates a laminated body.

The molding apparatus 1 comprises the male mold 2, the upper layer member-fixing frame 4, the expanding and contracting means 5, these three being situated below, the female mold 3 being supported by a well-known lifting and lowering mechanism (not shown) and being situated above.

The upper layer member-fixing frame 4 which has the upper face being opposite to the female mold 3 is mounted shiftably by a plurality of the expanding and contracting means 5, and possesses the sliding opening 6.

It is permissible for use in the expanding and contracting means 5 to adopt freely any known oil pressure cylinder, air pressure cylinder, air pressure spring, elastomeric spring, steel spring, and such like depending on the required stroke.

In this connection, there can be adopted preferably a spring mechanism capable of expanding and contracting in response to the mold-tightening force of both the molds, male 2 and female 3.

The convex parts 7 of the male mold 2 inserts into the sliding opening 6 which is shiftably slided by the outer side face 8 of the male mold 2 on the whole circumference.

The male mold 2 and the female mold 3 both slide on the outer side face 8 and the inner side face 9 of the whole circumference each other.

The cutting edges to cut the upper layer member 10 off consist of the edge 8a of the outer side face 8 of the male mold 2 and the edge 9a of the outer side face 9 of the female mold 3.

In the case of the upper layer member 10 made of the soft material such as a paper or a cloth, the edge 8a of the outer side face 8 of the male mold 2 and the edge 9a of the outer side face 9 of the female mold 3 need to be made from different materials having disparate degrees of hardness.

It is preferably to select from S45C (J.I.S.name of steel) or S45C (J.I.S.name of steel) for the actuation side (the side of the female mold 3 in this example) and from SKS (J.I.S.name of steel) or SKD11(J.I.S.name of steel) for the fixed side.

The clearance between the edge 8a of the outer side face 8 of the male mold 2 and the edge 9a of the outer side face 9 of the female mold 3 is a small distance such as from 0.01mm to 0,2mm for cutting the upper layer member 10. A small change of the above clearance value is permitted owing to the each variety and thickness of the the upper layer member 10.

Using the molding apparatus 1 relating to the exemplary embodiment which has such a construction as mentioned above, the method 1 according to our invention is effected for example, in the sequence of processes from ① to ⑥ described below;

① To begin with, the upper layer member 10 is arranged between the upper layer member-fixing frame 4 and the female mold 3, to say more exactly, the upper layer member 10 is placed on the upper layer member-fixing frame 4. (See Fig. 1)

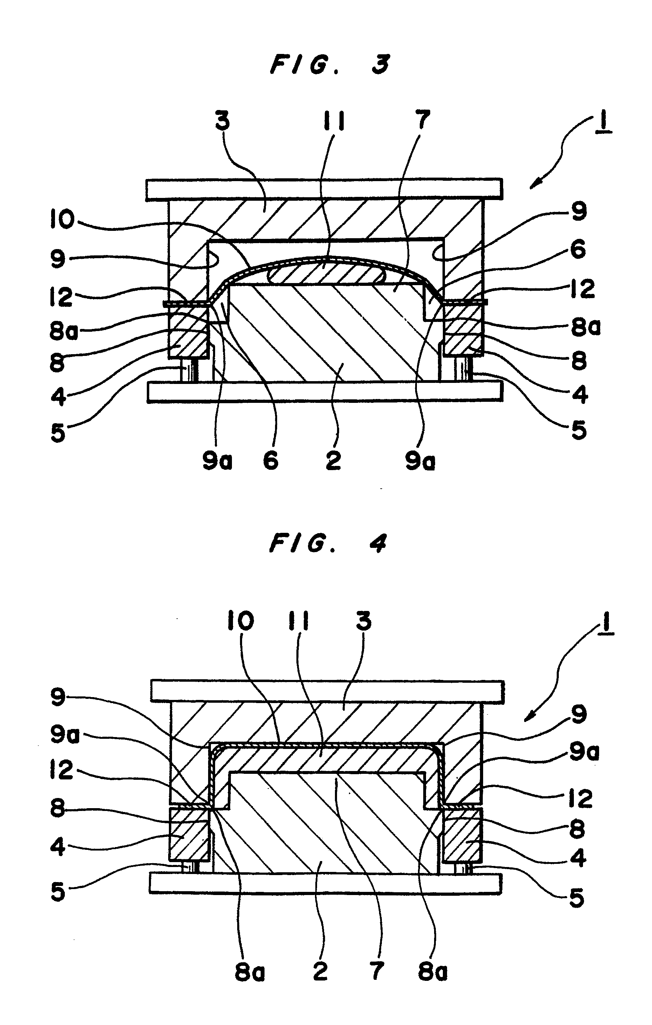

② Next, when making the lifting and lowering mechanism actuate, the female mold 3 goes down, the periphery 12 of the upper layer member 10 is held between the upper layer member-fixing frame 4 and the female mold 3. After that molten resin 11 is supplied into the space between the upper layer member 10 and the male mold 2. (See Fig.3) Thereafter the upper layer member-fixing frame 4 goes down following to contracting of the expanding and contracting means 5 by the mold-tightening force of holding the periphery of the upper layer member 10.

At this time, the supply of the molten resin 11 is conducted by a well-known melt-plasticizing means such as an extruder(not shown) through the molten resin passage (not shown) being provided in the interior of the male mold 2.

③ Just after that, the female old 3 and the layer member-fixing frame 4 go down by making the lifing and lowering mechanism actuate.

At the same time with the above, the molten resin 11 streams to compress the upper layer member 10 to the side of the female mold 3, in concert with which the molten resin 11 is squeezed into the cavity of the female mold 3 with the periphery 12 of the upper layer member 10 gliding between the upper layer member-fixing frame 4 and the female mold 3 and with the upper layer member 10 extending. (See Fig 4.)

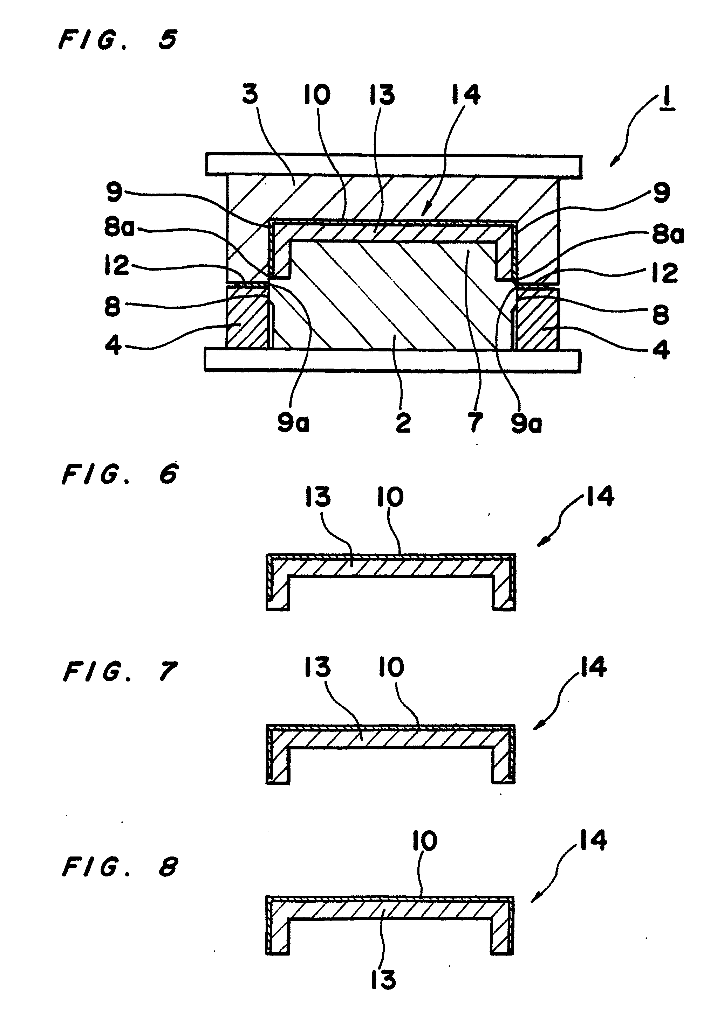

④ By the female mold 3 continuing to go down further, the upper layer member 10 is cut by the both edge (8a) and (9a) and the both molds 2.3 are mold - tightened completely, and the upper layer member 10 is also molded to be given form, whereby the upper layer member 10 and the synthetic resin 13 are united in a laminated body and the molding is completed. (See Fig.5) Therefore, the center points of the upper layer member 10 and the synthetic resinous bodys are in perfect accordance with each other.

In this method according to our invention, a point of time when the molten resin 11 is supplied is not restricted only to the above-described time.

It does not matter if the supply of the molten resin 11 is conducted either when both the male mold 2 and the female mold 3 are made to further approach as far as the position where the upper layer member 10 is squeezed into the intermediary stage after the periphery 12 of the upper layer member 10 has been held, or the upper layer member 10 has been cut.

Futhermore, the supply of the molten resin 11 may be conducted before placing the upper layer member 10 on the upper layer member-fixing frame 4(before holding the the upper layer member 10) in the state of Fig. 1.

In the method according to our invention, the form and appearance of laminated body 14 is influenced whether the timing of the cutting step of the upper layer member 10 is in accordance with the timing of the mold-tightening step or not.

Hereinafter, the case 1 to case 3 of the above-influenced embodiments are described.

The case 1.

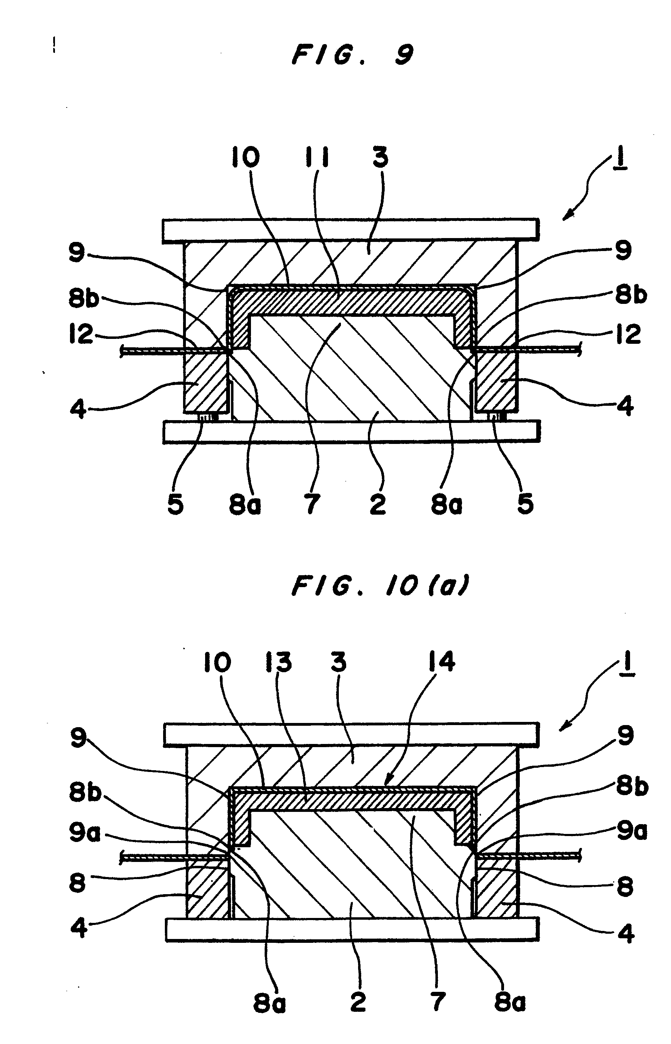

In the case that the timing of the cutting step of the upper layer member 10 is earlier than the timing of the mold-tightening step, a laminated body 14 in which the synthetic resin body 13 is overflowed out of the end of the upper layer member 10 like Fig.6 is obtained.

The case 2.

In the case that the timing of the cutting step of the upper layer member 10 is earlier than the timing of the mold-tightening step but the both timings are in nearly accordance, a laminated body 14 in which the sythetic resin body 13 is nearly-perfectly wrapped by the upper layer member 10 like Fig.7 is obtained.

The case 3.

In the case that the timing of the cutting step of the upper layer member 10 is in approximate accordance with the timing of the mold-tightening step, a laminated body 14 in which the synthetic resin body 13 is perfectly wrapped by the upper layer member 10 like Fig.8 is obtained.

In the case 3, the upper layer member 10 may be imperfect cut as possible as cutting by hand pulling after molding.

In the method and apparatus according to our invention, it is sufficient if the molten resin 11 is supplied between the upper layer member 10 and the male mold 2 through at least any one of the molten synthetic resin passages being provided at the inside of the male mold 2 or at the outside of the molding apparatus 1.

In the method and apparatus according to our invention, the periphery 12 of the upper layer member 10 sometimes shifts gradually toward the inside of the female mold 3 with the progress of the molding, so that it is especially important to set the fixing force against the upper layer member 10, because the upper layer member 10 is liable to deform itself nearly along the form of the female mold 3 as the latter goes down.

Such being the case, when the fixing force working is too small, then the upper layer member 10 undergoes a big glide produced between the upper layer member 4 and the female mold 3, and thereby the upper layer member 10 broader than the area required for the laminated body 14 comes to be supplied into the female mold 3, which brings wrinkles to the laminated body 14, while on the other hand when the fixing force is too big, then the upper layer member 10 becomes unable to bear the tensile force created, thereby ending in the breakage.

In the method apparatus according to our invention, in case, for example the form of the laminated body 14 is simple, only the mutually opposite two edges of the upper layer member 10 need be held. On the other hand, in case for example the form of the laminated body 14 is complex, all the edges of the upper layer member 10 must be held by optimum fixing force for obtaining the laminated body 14 without wrinkles and breakage on the upper layer member 10.

In our invention, in case, for example the form of the laminated body 14 is simple and some fiber powerful in stretchiness is used for the upper layer member 10 (there is often among various kinds of fibers such a one as having the strechiness of 400%), it is not always necessary that upper layer member 10 ought to have the gliding behavior as described in the exemplary embodiment.

In order to set the above-mentioned fixing force at the time of effectuating the method described herein, it is necessary to select the optimum value being based on the properties of the materials that is, the stretchiness or the squeezing rate of the upper layer member 10, the curvature of every vertex and edges of the molded goods and others. However, the one generally used is of 5 ～300 kg/cm to the sectional area of the fixing part.

In setting the required area of the upper layer member 10, it is necessary to design the upper layer member 10 so as to check the occurrence of trimming losses as possible first on the basis of the developing area of the laminated body 14 and next by reducing the size of the upper layer member 10 while taking the stretchiness thereof into consideration.

For the upper layer member 10 being used in the method according to the invention, there can be named the following substances: woven stuff, unwoven stuff, metal, fiber, thermoplastic resinous net, paper, metal foil, and sheet or film made of thermoplastic resin and thermoplastic elastomer, but things decorated with concavoconvex patterns of tie-dyed fabrics, by printing or dyeing, or foaming bodies may he used and further it is also possible to use the above mentioned substances in the form of a laminated article which is made by laminating a single or two or more sorts of them using some adhesive agents and the like.

In using such an upper layer member 10, it is also possible pre-heat it in order to regulate the stress or the stretchiness the upper layer member 10 before supplying it.

For the synthetic resin 13 used in the method according to the invention, it is possible to use any such substances as are ordinarily used in compression molding, injection molding, and extrusion molding, for example, nonfoaming or foaming resins made of thermoplastic elastomers such as polypropylene, polyethylene, polystyrene, acrylonitrile-styrene-butadien block copolymer, thermoplastic resin like nylon, ethylene-propylene block copolymer, styrene-butadiene, block copolymer, and such like, and further the materials above mentioned being made to contain fillers, for example, inorganic filler, glass fiber etc., etc, and such additives as pigment, talc, antistatic agent, and others.

[ Modified Embodiment 1 ] :

Figs. 9 to 11 are sectional Views explaining the modified embodiment 1 of the method and apparatus according to the invention, wherein the male mold 2 has a notch 8b continuing the whole circumference in the vicinity of the outer side face edge 8a thereof.

The length (L) of the notch 8b is decided on the basic of the form of the laminated body 14 and the material of the upper layer member 10 not restricted in the same length as the length of each side of the outer side face 8 edge 8a of the male mold 2 through the whole circumference.

And the width (W) of the notch 8b is planned on the basis the size of the most extended measure in the plane direction and the most compressioned measure in the thickness direction of the upper layer member 10 during the whole molding process.

The clearance between the edge 8a of the outer side surface 8 of the male mold 2 and the edge 9a of the female mold 3 is commonly planed in small distance such as as from 0.01mm to 0.2mm for cutting the upper layer member 10 but a small change from the above clearance value is permitted owing to the each variety and the each thickness of the upper layer member 10.

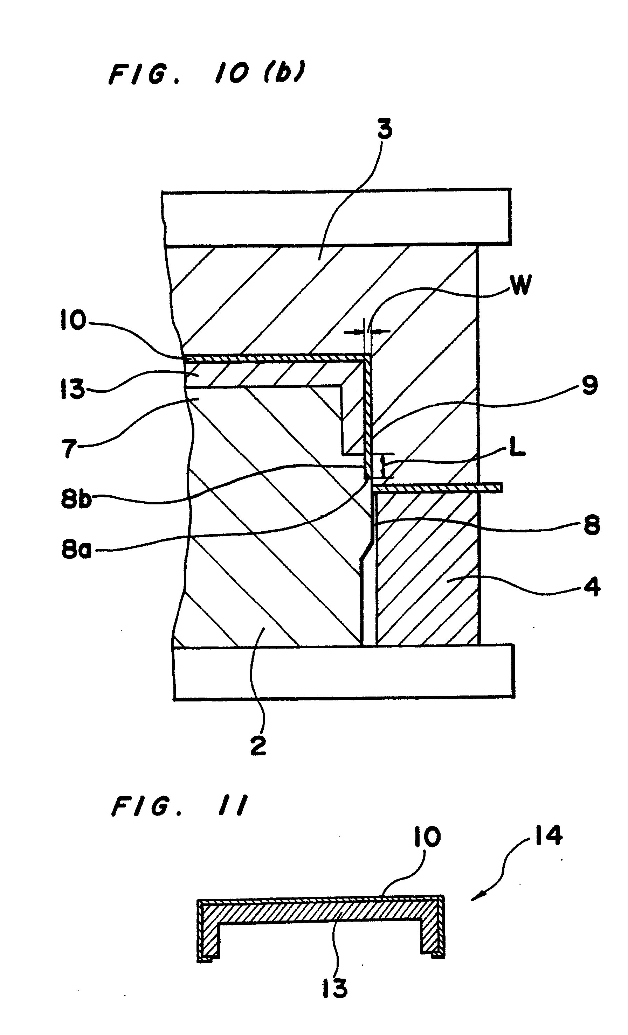

When the method by using of the molding apparatus 1 according to this modified embodiement 1 is performed, the upper layer 10 slidingly inserts into the notch 8b prior to the finishing of mold-tightening (see Fig.9), and after that the laminated body 14 is prepared at the time of completion of mold-tightening (see Fig. 10).

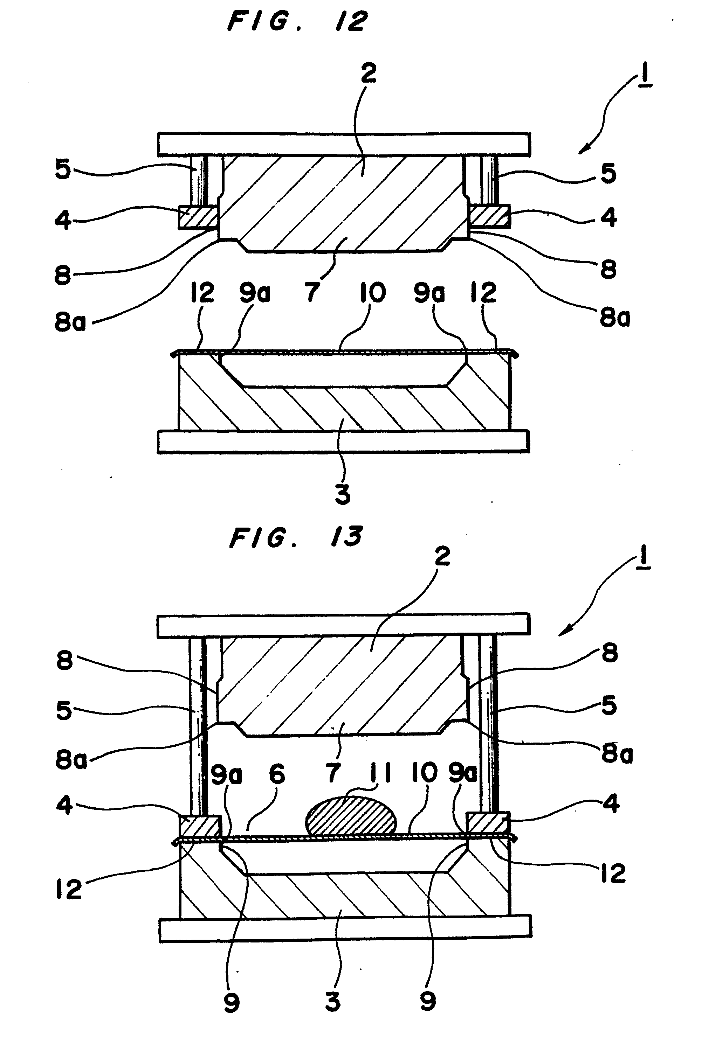

In this laminated body 14, the end of the upper layer 10 is expanded out of the outside face of the resin body 13 like Fig.10 and Fig.11.

Therefore, the expanded end of the upper layer 10 is bent into the inner direction of the resin body 13, resulting in the laminated body 14 of Fig.11 being obtained.

In the modified embodiment 2 to 4 hereinafter described, although the relative position between their male molds 2 and their female molds 3 and the upper layer members fixing-frame 4 are subject to change, they have basically the same construction as effect as mentioned in the exemplary embodiment.

[ Modified Embodiment 2 ]:

Figs.12 to 15 are sectional views explaining the modified embodiment 2 of the method and apparatus according to the invention, wherein the upper layer member-fixing frame 4 is provided shiftably at the male mold 2 which is here situated above, while on the other hand the female mold 3 is situated below.

The method according to the invention is effected by the molding apparatus 1 of this modified embodiment 2 going through the sequence of the following processes ① to ④:

① The upper layer member 10 is placed on the female mold 3. (See Fig. 12).

② Next, after holding the upper layer member 10 between the upper layer member-fixing frame 4 and the female mold 3 by means of the expanding and contracting means 5 (for the expanding and contracting means 5 in this case, it is possible to adopt an air pressure cylinder or an oil pressure cylinder), molten resin is supplied between the upper layer member 10 and the male mold 2 from outside the molding apparatus 1 (See Fig. 13).

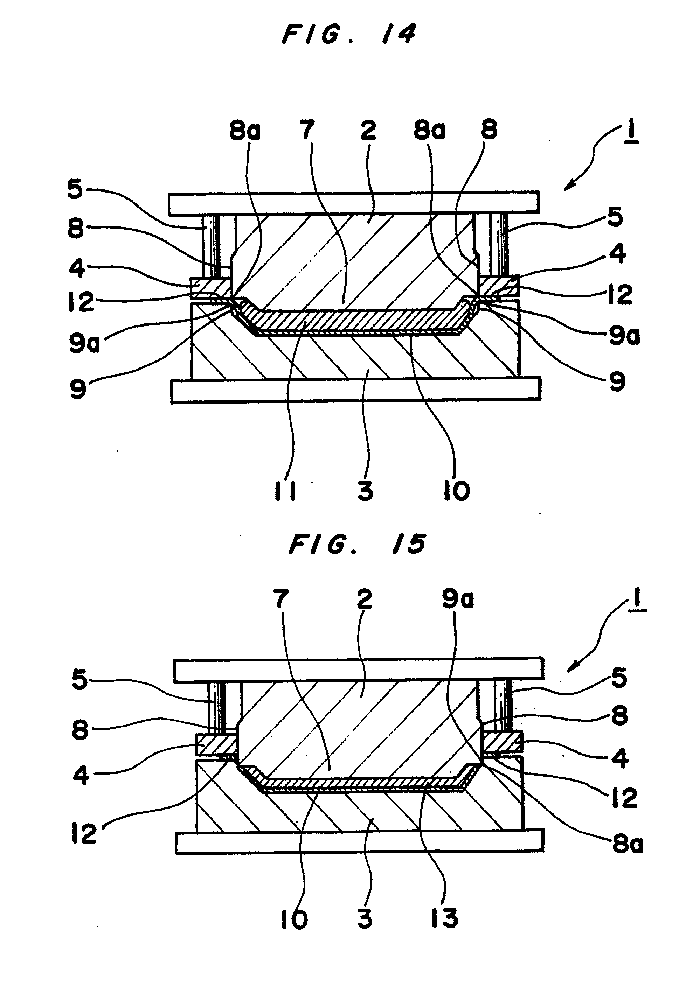

③ When the lifting and lowering mechanism is put into action without delay, then the male mold 2 goes down as the expanding and contracting means 5 contracts, while the molten resin 11 streams to push up the upper layer member 10 to the side of the female mold 3, in concert with which the upper layer member 10 is squeezed while gliding and stretching between the upper layer member-fixing frame 4 and the female mold 3 into the concave part produced at the side of the female mold 3 (See Fig. 14).

④ As the made mold 2 further goes down, the upper layer member 10 and the molten resin 15 unite in a body to be given form and to be cut, and graduate into the completion of the molding as in the exemplary embodiment.

[ Modified Embodiment 3 ]:

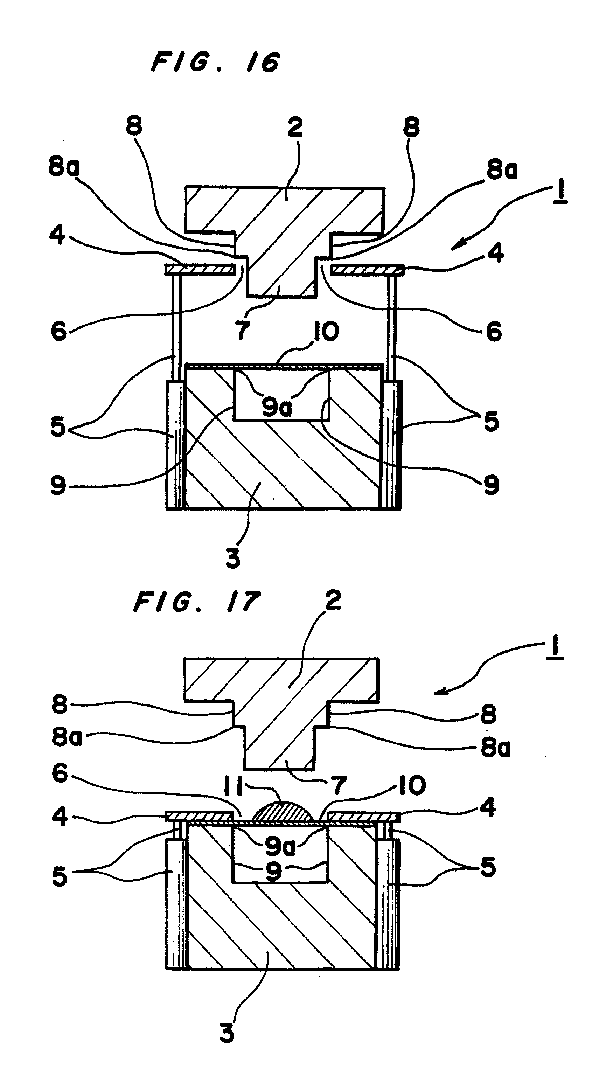

Figs. 16 to 18 are sectional views explaining the modified embodiment 3 of the method and apparatus according to the invention, wherein the upper layer member-fixing frame 4 is provided shiftably at the male mold 2 which is here situated below, while on the other hand the female mold 3 is situated above.

The method according to the invention is effect by the molding apparatus 1 of this modified embodiment 3 going through the sequence of the following processes.

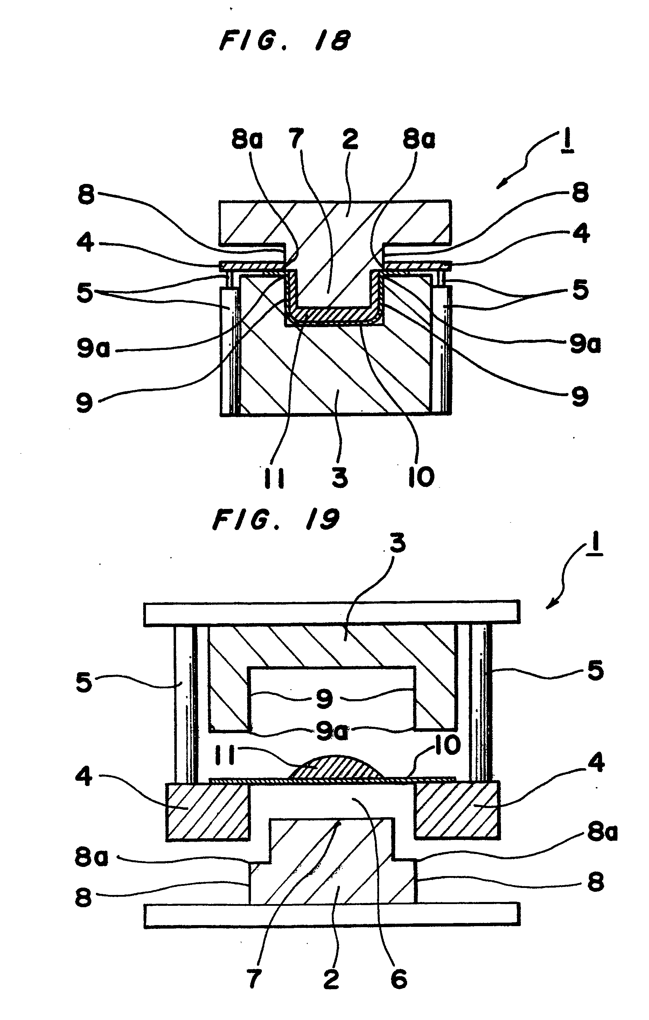

The upper layer member 10 being placed on the female mold 3 like Fig. 12, next, after holding the periphery 12 of the upper layer member 10 between the upper layer member-fixing frame 4 and the female mold 3, molten resin 11 being supplied, the upper layer member 10 and the molten resin 11 unite in a body to be given form and to be cut by the mold-tightenings, and graduate into the completion of the molding as in the exemplary embodiment (See Fig. 18).

[ Modified Embodiment 4 ]:

Figs.19 is a sectional view explaining the modified embodiment 4 of the method and apparatus according to the invention, wherein the upper layer member-fixing frame 4 is provided shiftably at the female mold 3 which is here situated above.

The method according to the invention is effected by the molding apparatus 1 of this modified embodiment 4 going through the sequence of the following processes.

The upper layer member 10 being placed on the upper layer member-fixing frame 4 like Fig.19, next, molten resin 11 being supplied through molten resin passage (not shown) provided in the female mold 3, after holding the periphery 12 of the upper layer member 10 between the upper layer member-fixing frame 4 and the female mold 3, the upper layer member 13 and the molten resin 11 unite in a body to be given form and to be cut by the mold-tightening, and graduate into the completion of the molding.

In the method and apparatus according to the invention, the separating direction namely here means the mold-tightening direction is not always

only the hereinbefore described vertical direction, but it does not matter if it is the horizontal directions, for example.

In this latter case, lest the molten resin 11 should flow out of the molding apparatus 1 the supply of the molten resin 11 is peformed either after mold-tightening to some extent or before mold-tightening while making use of a receiver being built in advance within the apparatus.


[ Effect of the invention ]

As explained in detail in the above, the method according to the invention is designed in such a manner that it comprises the steps of: arranging the upper layer member between an upper layer member-fixing frame which is attached shiftably either on the side of a male mold or on the side of a female mold of a molding apparatus provided with the male mold and the female mold both sliding on the each face of the whole circumference and which has a sliding opening where the outer side face of the male mold slides over the whole circumference and the convex parts of the male mold inserts through, and the female mold;

holding the periphery of the upper layer member between the upper layer member-fixing frame and the female mold;

giving form to the upper layer member and at the sane time cutting the upper layer member off between the outer side face edge of the male mold and the inner side face edge of the female mold within measure by mold-tightening the female and male molds together;

continuing to place the upper layer member thus given form while leaning as it stands;

supplying a required molten resin from a molten resin passage between the upper layer member and the male mold prior the completion of the above-mentioned cutting ;

and molding the molten resin to obtain the laminated body aimed-at.

With such a construction, the method according to the invention has various effect that it not only requires any additives but also is adapted excellently to the mass production in simple working processes, and that it able to make the laminated body being in possession of a good appearance without wrinkles or tears on the upper layer member and being short of wrinkles on the bended parts of the upper layer member, as a result of which there can be obtained the laminated body which is low in residual stress owing to the orientation because of the molding of its synthetic resin here not being dependent on the injection molding method and further which has only a small deformation like distortion as well.

On the other hand, the molding apparatus according to the invention is designed in such a manner that it comprises at the very least a male mold, a female mold, an upper layer member-fixing frame, an expanding and contracting means, and which is characterized in that the upper layer member-fixing frame is mounted either on the side of the male mold or on the side of the female mold shiftably by means of the expanding and contracting means and has a sliding opening where the outer side face of the male mold slides over the whole circumference and the convex parts of the male mold inserts through;

both the outer side edge of the male mold and the inner side edge of the female mold consist of the cutter of the upper layer member; and the outer side of the male mold and the inner side of the female mold slide each other over the whole of the circumference so that a cutting machine for the upper layer mamber is not only required separeately but also the method according to the present invention having the above mentioned effects is able to be effectuated easily.

Further, the preferable feeling of the laminated body produced in accordance with the method of the invention can be kept long because of the effective pressure required for molding the synthetic resin being small, for example, now by being capable of preventing the foaming layer from crushing in case of using some foaming sheet for the upper layer member now by being capable of preventing the napped part from falling in case of using the cloth treated by nap-raising.


**Claims**

1.  A method of making a laminated body consisting of a synthetic resin (11) provided with an upper layer member (10) thereon, comprising the steps of:

    arranging said upper layer member (10) between a female mold (3) and an upper layer member-fixing frame (4) attached shiftably either on the side of a female mold (3) or on the side of a male mold (2);

    supplying molten resin (11) between said male mold (2) and female mold (3);

    closing said female mold (3) and said upper layer member-fixing frame (4) so that periphery (12) of said upper layer member (10) is held by contact of said female mold (3) and said upper layer member-fixing frame (4);

    further closing said female mold (3) and said male mold (2) so as to start to shape at least said upper layer member (10); and

    compressing said female mold (3) and said male mold (2) so as to shape said upper layer member (10) and said molten resin (11) by this compression; characterised by

cutting, prior to or simultaneous with completion of said compressing step said layer member (10) by engagement of the inner edges (9a) of said female mold (3) with outer edges (8a) of said male mold (2) while said molten resin (11) is shaped between said molds (2,3) without being cut by said edges, so as to form the laminated body.

2. A method as set forth in claim 1, characterized in that said upper layer member-fixing frame (4) is shiftably attached to the side of said male mold (2) which is situated below the female mold (3).

3. A method as set forth in claim 1, characterized in that said upper layer member-fixing frame (4) is shiftably attached to the side of said male mold (2) which is situated above said female mold (2).

4. A method as set forth in claim 1, characterized in that said female mold (3) is situated below said male mold (2) and said upper layer member-fixing frame (4) is shiftably attached to the side of said female mold (3).

5. A method as set forth in claim 1, characterized in that said female mold (3) is situated above said male mold (2) and said upper layer member-fixing frame (4) is shiftably attached to the side of said female mold (3).

6. A method as set forth in any preceding claim, characterized in that said upper layer member (10) substantially covers the whole surface of said resin body (11).

7. A method as set forth in any of claims 1 to 5, characterized in that said upper layer member (10) covers the whole surface of said resin body (11).

8. A method as set forth in any preceding claim, characterized in that said upper layer member extends to the outer surface end of said resin body.

9. A molding apparatus for making a laminated body consisting of a synthetic resin member (11) having an upper layer member (10) thereon, which apparatus comprises:
   a male mold (2);
   a female mold (3);
   an upper layer member-fixing frame (4); and

an expanding and contracting means (5), the upper layer member-fixing frame (4) being mounted either on the side of the male mold (2) or on the side of the female mold (3) for shifting by means of the expanding and contracting means (5) and the outer side face of the male mold (2) being slidable over the whole circumference of an opening through which the convex parts of the male mold are insertable;

characterized in that both the outer side edge (8a) of the male mold (2) and the inner side edge (9a) of the female mold (3) constitute a cutter for the upper layer member and the outer side of the male mold and the inner side of the female mold being dimensioned to slide on each other over the whole circumference, so that said synthetic resin member (11) can be molded between said molds (2,3) without being cut by said cutter to form said laminated body.

10. Apparatus as set forth in claim 9, characterized in that a molten resin passage is provided in the interior of said male mold (2).

11. Apparatus as set forth in claim 9, characterized in that a molten resin passage is provided in the interior of said female mold (3).

12. Apparatus as set forth in claim 9, characterized in that a molten resin passage is provided outside said molding apparatus.

## Revendications

1. Procédé de fabrication d'un corps stratifié comprenant une résine de synthèse (11) ayant un organe constituant une couche supérieure (10) sur elle, comprenant les étapes suivantes :
   la disposition de l'organe constituant une couche supérieure (10) entre un moule femelle (3) et un cadre (4) de fixation de l'organe constituant une couche supérieure, monté afin qu'il se déplace soit du côté du moule femelle (3) soit du côté du moule mâle (2),
   la transmission de résine fondue (11) entre le moule mâle (2) et le moule femelle (3),
   la fermeture du moule femelle (3) et du cadre (4) de fixation de l'organe constituant une couche supérieure afin que la périphérie (12) de l'organe constituant une couche supérieure (10) soit maintenue par contact du moule femelle (3) et du cadre (4) de fixation de l'organe constituant une couche supérieure,
   la fermeture supplémentaire du moule femelle (3) et du moule mâle (2) afin que l'organe constituant une couche supérieure (10) au moins commence à être mis en forme, et

la compression du moule femelle (3) et du moule mâle (2) afin que l'organe constituant une couche supérieure (10) et la résine fondue (11) soient mis en forme par cette compression,

caractérisé par :

la découpe, avant ou pendant la fin de l'étape de compression, dudit organe constituant une couche supérieure (10) par coopération des bords internes (9a) du moule femelle (3) et des bords externes (8a) du moule mâle (2) lorsque la résine fondue (11) est mise en forme entre les moules (2, 3), sans découpe par les bords, si bien que le corps stratifié est formé.

2. Procédé selon la revendication 1, caractérisé en ce que le cadre (4) de fixation de l'organe constituant une couche supérieure est monté sur le côté du moule mâle (2) qui est placé sous le moule femelle (3), afin qu'il puisse coulisser.

3. Procédé selon la revendication 1, caractérisé en ce que le cadre de fixation (4) est monté du côté du moule mâle (2) qui est placé au-dessus du moule femelle (2), de manière qu'il puisse coulisser.

4. Procédé selon la revendication 1, caractérisé en ce que le moule femelle (3) est placé au-dessous du moule mâle (2) et le cadre de fixation (4) de l'organe constituant une couche supérieure est monté afin qu'il puisse coulisser vers le côté du moule femelle (3).

5. Procédé selon la revendication 1, caractérisé en ce que le moule femelle (3) est placé au-dessus du moule mâle (2) et le cadre de fixation (4) est fixé afin qu'il puisse coulisser du côté du moule femelle (3).

6. Procédé selon l'une quelconque des revendications précédentes, caractérisé en ce que l'organe constituant une couche supérieure (10) recouvre pratiquement toute la surface du corps (11) de résine.

7. Procédé selon l'une quelconque des revendications 1 à 5, caractérisé en ce que l'organe constituant une couche supérieure (10) recouvre toute la surface du corps de résine (11).

8. Procédé selon l'une quelconque des revendications précédentes, caractérisé en ce que l'organe constituant une couche supérieure recouvre l'extrémité de la surface externe du corps de résine.

9. Appareil se moulage destiné à la fabrication d'un corps stratifié constitué d'un élément (11) de résine de synthèse ayant un organe constituant une couche supérieure (10) sur lui, l'appareil comprenant :

un moule mâle (2),

un moule femelle (3),

un cadre (4) de fixation d'organe constituant une couche supérieure, et

un dispositif (5) de dilatation et de contraction, le cadre (4) de fixation de l'organe constituant une couche supérieure étant monté soit du côté du moule mâle (2) soit du côté du moule femelle (3) afin qu'il puisse coulisser sous la commande du dispositif (5) de dilatation et de contraction, la face latérale externe du moule mâle (2) pouvant coulisser sur toute la circonférence d'une ouverture par laquelle les parties convexes du moule mâle peuvent pénétrer,

caractérisé en ce que le bord latéral externe (8a) du moule mâle (2) et le bord latéral interne (9a) du moule femelle (3) constituent un élément de coupe de l'organe constituant une couche supérieure et la face externe du moule mâle et la face interne du moule femelle ont des dimensions telles qu'elles peuvent coulisser l'une sur l'autre sur toute la circonférence, si bien que l'élément (11) de résine de synthèse peut être moulé entre les moules (2, 3) sans être découpé par l'élément de coupe lors de la formation du corps stratifié.

10. Appareil selon la revendication 9, caractérisé en ce qu'un passage de circulation de résine fondue est formé à l'intérieur du moule mâle (2).

11. Appareil selon la revendication 9, caractérisé en ce qu'un passage de circulation de résine fondue est formé à l'intérieur du moule femelle (3).

12. Appareil selon la revendication 9, caractérisé en ce qu'un passage de circulation de résine fondue est formé à l'extérieur de l'appareil de moulage.

**Ansprüche**

1. Verfahren zur Herstellung eines Schichtkörpers, welcher aus einem Kunstharz (11) besteht, und mit einem Oberschichtteil (10) darauf versehen ist, mit den Schritten:

Anordnen des Oberschichtteiles (10) zwischen einer Matrize (3) und einem Oberschichtteil-Fixierrahmen (4), welcher verschiebbar entweder an der Seite einer Matrize (3) oder an der Seite eines Stempels (2) angefügt ist;
Einfüllen von Flüssigharz (11) zwischen den Stempel (2) und die Matrize (3);
Schließen der Matrize (3) und des Oberschichtteil-Fixierrahmens (4), so daß ein Rand (12) des Oberschichtteiles (10) durch Kontakt der Matrize (3) und des Oberschichtteil-Fixierrahmens (4) gehalten wird;
ferner Schließen der Matrize (3) und des Stempels (2), um zu beginnen, wenigstens das Oberschichtteil (10) zu formen, und Zusammendrücken der Matrize (3) und des Stempels (2), um das Oberschichtteil (10) und das Flüssigharz (11) durch dieses Zusammendrücken zu formen;
**gekennzeichnet durch**:
Schneiden des Schichtteiles (10) vor dem Abschluß des Schrittes des Zusammendrückens oder gleichzeitig damit, durch Eingreifen der inneren Kanten (9a) der Matrize (3) mit äußeren Kanten (Ba) des Stempels (2), während das flüssige Harz (11) zwischen den Formteilen (2, 3) geformt wird, ohne von den Kanten geschnitten zu werden, um den Schichtkörper zu formen.

2. Verfahren nach Anspruch 1, **dadurch gekennzeichnet**, daß der Oberschichtteil-Fixierrahmen (4) verschiebbar an die Seite des Stempels (2) angefügt ist, welcher sich unterhalb der Matrize (3) befindet.

3. Verfahren nach Anspruch 1, **dadurch gekennzeichnet**, daß der Oberschichtteil-Fixierrahmen (4) verschiebbar an die Seite des Stempels (2) angefügt ist, welcher sich oberhalb der Matrize (2) befindet.

4. Verfahren nach Anspruch 1, **dadurch gekennzeichnet**, daß die Matrize (3) sich unterhalb des Stempels (2) befindet, und der Oberschichtteil-Fixierrahmen (4) verschiebbar an die Seite der Matrize (3) angefügt ist.

5. Verfahren nach Anspruch 1**, dadurch gekennzeichnet**, daß die Matrize (3) sich oberhalb des Stempels (2) befindet, und der Oberschichtteil-Fixierrahmen (4) verschiebbar an die Seite der Matrize (3) angefügt ist.

6. Verfahren nach einem der vorhergehenden Ansprüche, **dadurch gekennzeichnet, daß das** Oberschichtteil (10) im wesentlichen die gesamte Oberfläche des Harzkörpers (11) abdeckt.

7. Verfahren nach einem der Ansprüche 1 bis 5, **dadurch gekennzeichnet**, daß das Oberschichtteil (10) die gesamte Oberfläche des Harzkörpers (11) abdeckt.

8. Verfahren nach einem der vorangehenden Ansprüche, **dadurch gekennzeichnet**, daß das Oberschichtteil sich bis zu den äußeren Oberflächenenden des Harzkörpers erstreckt.

9. Formvorrichtung zur Herstellung eines Schichtkörpers, welcher aus einem Kunstharzteil (11) besteht, mit einem Oberschichtteil (10) darauf, welche Vorrichtung umfaßt:
einen Stempel (2); .
eine Matrize (3);
einen Oberschichtteil-Fixierrahmen (4); und eine sich ausdehende und zusammenziehende Einrichtung (5), wobei der Oberschichtteil-Fixierrahmen (4) entweder an der Seite des Stempels (2) oder an der Seite der Matrize (3) montiert ist, um sich mittels der sich ausdehenden und zusammenziehenden Einrichtung (5) zu verschieben, und die Außenoberfläche des Stempels (2) gleitfähig ist über dem gesamten Umfang einer Öffnung, durch welche die konvexen Teile des Stempels eingefügt werden können;
**dadurch gekennzeichnet**, daß sowohl die Außenseitenkante (8a) des Stempels (2) als auch die Innenseitenkante (9a) der Matrize (3) eine Schneideinrichtung für das obere Schichtteil bilden, und die Außenseite des Stempels und die Innenseite der Matrize dimensioniert sind, aufeinander über den gesamten Umfang zu gleiten, so daß das Kunstharzteil (11) zwischen den Formteilen (2, 3) geformt werden kann, ohne von der Schneidvorrichtung geschnitten zu werden, um den Schichtkörper zu formen.

10. Vorrichtung nach Anspruch 9, **dadurch gekennzeichnet**, daß eine Flüssigharzpassage in dem Inneren des Stempels (2) vorgesehen ist.

11. Vorrichtung nach Anspruch 9, **dadurch gekennzeichnet**, daß eine Flüssigharzpassage in dem Inneren der Matrize (3) vorgesehen ist.

12. Vorrichtung nach Anspruch 9, **dadurch gekennzeichnet**, daß eine Flüssigharzpassage außerhalb der Formvorrichtung vorgesehen ist.

FIG. 1

FIG. 2

# FIG. 3

# FIG. 4

FIG. 5

FIG. 6

FIG. 7

FIG. 8

# FIG. 9

# FIG. 10 (a)

15

FIG. 10 (b)

FIG. 11

FIG. 12

FIG. 13

# FIG. 14

# FIG. 15

FIG. 16

FIG. 17

FIG. 18

FIG. 19